# EUROPÄISCHE PATENTSCHRIFT

(11) **EP 3 369 603 B1**
(45) Veröffentlichungstag und Bekanntmachung des Hinweises auf die Patenterteilung: **30.03.2022**
(21) Anmeldenummer: 18155328.0
(22) Anmeldetag: 06.02.2018
(51) Int. Cl.: B60L 50/00, H01M 50/20, H01M 50/24, H01M 50/256, H01M 50/35, H01M 10/48, B60P 3/00, B60P 3/20, H01M 10/42

(54) **LASTKRAFTWAGEN, ANHÄNGER FÜR EINEN LASTKRAFTWAGEN UND AUFLIEGER FÜR EINEN LASTKRAFTWAGENN ZUM TRANSPORT VON FAHRZEUGBATTERIEN**
TRUCK, TRAILER FOR A TRUCK AND SEMI-TRAILER FOR A TRUCK FOR TRANSPORTING VEHICLE BATTERIES
POIDS LOURD, REMORQUE POUR UN POIDS LOURD ET SEMI-REMORQUES POUR UN POIDS LOURD POUR TRANSPORT DE BATTERIES DE VÉHICULES

(30) Priorität: 09.02.2017 DE 102017202106
(43) Veröffentlichungstag der Anmeldung: 05.09.2018
(73) Patentinhaber: Fritz GmbH & Co. KG, 74078 Heilbronn (DE)
(72) Erfinder: Doll, Fredy, 77855 Achern (DE); Fritz, Wolfram, 74193 Schwaigern (DE); Nohe, Andreas, 74834 Elztal (DE); Sanna, Gerardo, 73547 Lorch (DE)
(74) Vertreter: Witte, Weller und Partner Patentanwälte mbB Stuttgart

(56) Entgegenhaltungen:
- EP-A2- 2 517 956
- DE-A1- 10 224 808
- DE-A1-102009 041 629
- DE-A1-102011 009 696

## Beschreibung

### ANWENDUNGSGEBIET UND STAND DER TECHNIK

Die Erfindung betrifft einen Lastkraftwagen, einen Anhänger für einen Lastkraftwagen und Auflieger für einen Lastkraftwagen mit einem Laderaum. Die Erfindung betrifft dabei insbesondere Maßnahmen, um den Laderaum eines solchen Fahrzeugs in vorteilhafter Art und Weise für den Transport von Batterieeinheiten als Nutzlast verwenden zu können.

Im Automobilbau verlagert sich die Entwicklung von Kraftfahrzeugen derzeit in Richtung von elektrischen Kraftfahrzeugen. Vollelektrische oder hybridelektrische Kraftfahrzeuge werden üblicherweise mit einem Energiespeicher in Form einer Batterieeinheit ausgestattet, die in den Kraftfahrzeugen meist im Bereich des Unterbodens angeordnet sind.

Insbesondere bei Batterieeinheiten für vollelektrische Fahrzeuge handelt es sich um sehr große und schwere Batterieeinheiten, die häufig eine Grundfläche von 2 bis 3 m² aufweisen, mehrere Hundert Kilogramm bis fast zu einer Tonne wiegen und entsprechend schwer zu handhaben sind. Der Transport solcher Batterieeinheiten im Zulieferprozess vor der Fahrzeugmontage stellt sich aufgrund der Maße und Masse der Batterieeinheiten und der von solchen Batterieeinheiten aufgrund ihrer Bestandteile und ihrer elektrischen Ladung ausgehenden Gefahr als schwierig dar.

Das Versagen einer Batterieeinheit kann mit Austreten von Gasen, mit Temperaturerhöhungen bis hin zu einem Brand oder gar dem Explodieren von Batterieeinheiten einhergehen.

Aus der DE 10 2009 041 629 A1 ist ein Behälter, insbesondere in Form eines Containers, bekannt, der über Aufnahmebereiche zum Einschieben von Fahrzeugbatterien verfügt. Aus der DE 10 2011 009 696 A1 sind Transportvorrichtungen für elektrochemische Energiespeichervorrichtungen bekannt. Diese weisen eine Sensorik zur Erfassung der Luftzusammensetzung auf.

Weitere Gestaltungen, die den Hintergrund der vorliegenden Erfindung bilden, sind aus den Dokumenten DE 102 24808 A1 und EP 2 517 956 A2 bekannt.

### AUFGABE UND LÖSUNG

Aufgabe der Erfindung ist es, eine Transportmöglichkeit für großvolumige Batterieeinheiten für Elektrofahrzeuge zu schaffen, die gegenüber der bisherigen Art des Transportes auf Ladeflächen von Lastkraftwagen oder deren Anhänger oder Auflieger sicherer ist und eine vergleichsweise einfache Handhabung und Überwachung der Batterieeinheiten gestattet.

Hierfür werden erfindungsgemäß ein Lastkraftwagen, ein Anhänger für einen Lastkraftwagen und ein Auflieger für einen Lastkraftwagen vorgeschlagen, die wie nachfolgend erläutert mit einem neuartig gestalteten Laderaum ausgestattet sind.

Der Laderaum verfügt über eine Mehrzahl von Aufnahmeeinheiten zur Aufnahme von Batterieeinheiten als Nutzlast. Diese mindestens zwei, vorzugsweise aber mindestens 6, insbesondere vorzugsweise mindestens 10 Aufnahmeeinheiten sind jeweils zur individuellen Überwachung vorgesehen. Hierfür ist mindestens ein Sensor zur Erfassung einer Zustandsgröße der darin aufgenommenen Batterieeinheit vorgesehen und/oder es ist mindestens eine Anschlussvorrichtung zum Anschluss an die Batterieeinheit und mindestens einen in die Batterieeinheit integrierten Sensor zur Erfassung einer Zustandsgröße der Batterieeinheit vorgesehen und/oder es ist mindestens eine Anschlussvorrichtung zum Anschließen an Polelemente der Batterieeinheit zum Zwecke der Spannungsüberwachung vorgesehen.

Der Laderaum des Lastkraftwagens ist somit in die genannten Aufnahmeeinheiten segmentiert, die jeweils eine der großvolumigen Batterieeinheiten aufnehmen. Diese Batterieeinheiten werden bei der erfindungsgemäßen Gestaltung individuell mittels Sensoren oder Messgeräten überwacht. Dies kann unmittelbare Betriebsparameter der Batterieeinheit (Spannung, Innenwiderstand, Ladung) betreffen oder Umgebungsparameter wie Temperatur oder Magnetfelder sowie die Position der Batterieeinheit in der Aufnahmeeinheit. Sofern die genannten Sensoren oder Messeinrichtungen integraler Bestandteil der Batterieeinheit sind, wie es beispielsweise bei Temperatursensoren üblich ist, kann die Aufnahmeeinheit mit einer Anschlussmöglichkeit für solche integrierten Sensoren ausgestattet sein.

Erfindungsgemäß umfasst jede Aufnahmeeinheit einen entnehmbaren Aufnahmebehälter zur Aufnahme der Batterieeinheit. Dieser kann somit vor Verladen mit der Batterieeinheit befüllt werden und in einem Aufnahmebereich verstaut werden, der fest in die Struktur des Laderaums ist und zur Aufnahme des Aufnahmebehälters ausgebildet ist. Dieser Aufnahmebereich kann insbesondere als Aufnahmeraum gestaltet sein, in den der Aufnahmebehälter seitlich eingeschoben wird. Es sind also spezifisch auf den Laderaum angepasste Aufnahmebehälter vorgesehen, die jeweils zur Aufnahme weniger (< 3) und insbesondere nur einer Batterieeinheit vorgesehen sind.

Diese Aufnahmebehälter können bei Vorbereitung des Transports mit der Batterieeinheit befüllt werden und es können weitere Vorbereitungsmaßnahmen erfolgen, bevor die Aufnahmebehälter im Laderaum verladen werden. Es sind die genannten Aufnahmebereiche, insbesondere in Form von Aufnahmeräumen, vorgesehen, die fest in die Struktur des Laderaums integriert sind und in vielfältiger Hinsicht angepasst sein können, um mit den Aufnahmebehältern in spezifischer Weise zusammenzuwirken. Hierzu gehören insbesondere die im Weiteren noch erläuterten elektrischen bzw. datentechnischen Verbindungen, Arretiermittel und Positioniermittel zur automatisierten Handhabung des Aufnahmebehälters im Aufnahmebereich und im Aufnahmebereich fest vorgesehene Sensorik zur Überwachung des Aufnahmebehälters mit der als Nutzlast eingefügten Batterieeinheit. Eine der Zustandsgrößen, deren Erfassung als vorteilhaft für die Analyse des Zustandes der Batterieeinheit angesehen wird, ist die Zusammensetzung der Luft in der Umgebung der Batterieeinheit. Bei einer Gestaltung der Aufnahmeeinheiten mit Aufnahmebehältern können diese einen gegenüber der Umgebung vollständig oder weitgehend isolierten Bereich schaffen, der sich für eine solche Luftanalyse eignet. Die Aufnahmebereiche zur Aufnahme solcher Aufnahmebehälter müssen in diesem Falle daher keine gasdicht isolierten Teilbereiche zur Verfügung stellen, so dass die Aufnahmebereiche insbesondere durch eine gerüstartige Struktur im Laderaum gebildet werden können.

Die Verwendung eines Aufnahmebehälters kann in verschiedener Hinsicht die Wirkung eines Adapters haben. So können für verschiedene Typen von Batterieeinheiten unterschiedliche Aufnahmebehälter vorgesehen sein, deren Außenmaße jedoch gleichermaßen zur Aufnahme in baugleichen Aufnahmebereichen vorgesehen sind. Es bedarf somit keiner strukturellen Anpassung des Laderaums in Hinblick auf seine Aufnahmebereiche, da unterschiedliche Batteriemaße durch die jeweils angepassten Aufnahmebehälter kompensiert werden. Bei Batterieeinheiten, die sich bezüglich ihrer Ausmaße nicht deutlich unterscheiden, kann auch die Verwendung identischer Aufnahmebehälter vorgesehen sein, die durch entnehmbare Einlegeteile an die Batterieeinheit anpassbar sind und die in im Weiteren noch erläuterter Weise zur flexiblen elektrischen oder datentechnischen Anbindung an verschiedene Batterieeinheiten ausgebildet sind.

Um eine Störung zu erkennen, die sich durch die Abgabe von Gas aus dem Batteriegehäuse ergeben könnte, ist jede der Aufnahmeeinheiten vorzugsweise mit einem Gassensor zur Erfassung der Zustandsgröße der Zusammensetzung der Luft ausgestattet. Dieser Gassensor kann sich im Aufnahmebereich zur Aufnahme eines Ausnahmebehälters befinden und/oder im Aufnahmebehälter selbst befinden. Insbesondere kann es zweckmäßig sein, wenn der Gassensor in einem aus dem Aufnahmeraum herausführenden Luftkanal angeordnet ist.

Ein solcher Gassensor ist in der Lage, die Zusammensetzung der Luft in Hinblick auf Gase zu untersuchen, deren Auftreten im Schadensfalle einer Batterie möglich ist. Welche Gase dies im Einzelnen sind, hängt primär von der chemischen Ausgestaltung der jeweiligen Batterieeinheiten ab. Insbesondere kann es zweckmäßig sein, hier einen oder mehrere Gassensoren zu verwenden, die in der Lage sind, die Konzentration von Wasserstoff, Fluorwasserstoffen, Schwefeldioxid, Kohlendioxid und Kohlenmonoxid zu erfassen.

Sofern Aufnahmebehälter zur Aufnahme von Batterieeinheiten vorgesehen sind, kann der Gassensor innerhalb dieser Aufnahmebehälter angeordnet sein, so dass er individuell an den Typ der Batterieeinheit angepasst sein kann. Eine ebenfalls vorteilhafte Gestaltung ergibt sich, wenn der Gassensor extern zum Aufnahmebehälter vorgesehen ist, insbesondere in einem Abluftkanal, durch den Luft ausströmt.

Jedem Aufnahmebereich kann weiterhin ein Sensor zur Erfassung des Vorhandenseins eines Aufnahmebehälters und/oder zur Erfassung der Position des Aufnahmebehälters zugeordnet sein. Ein solcher Sensor kann insbesondere dem Zweck dienen, während des Ladevorgangs zu ermitteln, ob der Aufnahmebehälter in seiner Sollposition angeordnet ist. Während des Transportes selbst kann mittels eines solchen Sensors geprüft werden, ob es zu einem Verrutschen der Nutzlast gekommen ist. Es sind verschiedene Ausgestaltungen eines solchen Sensors denkbar, wobei ein oder mehrere Rollenschalter oder Nockenschalter eine vergleichsweise einfache Gestaltung ermöglichen. Alternativ sind auch kapazitive Sensoren oder Induktionssensoren möglich.

Obwohl grundsätzlich die Anordnung eines solchen Sensors jeweils im Aufnahmebereich und somit fest im Laderaum verbleibend vorgesehen sein kann und als vorteilhaft angesehen wird, ist es auch denkbar, den Sensor am Aufnahmebehälter vorzusehen. Dies kann insbesondere dann zweckmäßig sein, wenn der Aufnahmebehälter auch die im Weiteren noch erläuterte dezentrale Auswerteeinheit umfasst.

Weiterhin kann jedem Aufnahmebereich oder jedem bei Nutzung in einem solchen Aufnahmebereich angeordneten Aufnahmebehälter ein Temperatursensor zugeordnet sein, der die Temperatur der Batterieeinheit misst. Vorzugsweise ist ein solcher Temperatursensor jedoch Teil der Batterieeinheit, die im Aufnahmebereich oder im Aufnahmebehälter transportiert wird. Ein in die Batterieeinheit integrierter oder extern zu dieser vorgesehener Temperatursensor wird vorzugsweise während des Transportes der Batterie zur Erkennung eines Schadensfalles genutzt, wie im Weiteren noch erläutert wird.

Der Temperaturbereich, innerhalb dessen Batterieeinheiten transportiert werden dürfen, hängt vom Typ der Batterieeinheit ab. Üblicherweise wird es als ideal angesehen, wenn die Temperatur der Batterie in etwa 40°C beträgt.

Vorzugsweise ist ein Belüftungssystem vorgesehen, mittels dessen Luft aus den Aufnahmeeinheiten herausgeleitet und/oder den Aufnahmeeinheiten zugeführt werden kann. Das Belüftungssystem kann grundsätzlich verschiedenen Zwecken einzeln oder gemeinsam dienen.

Zunächst kann die Zufuhr von Luft in die Aufnahmeeinheiten, insbesondere in die Aufnahmebehälter selbst, zur Temperierung der Batterieeinheit genutzt werden, wobei je nach Anwendungszweck zusätzlich ein Kühlaggregat zur Kühlung der Luft erforderlich sein kann. Je nach Anwendungsfeld kann es jedoch auch ausreichen, die zu- und abgeführte Luftmenge durch eine Aufnahmeeinheit aktiv zu regeln, um auf die Temperatur Einfluss zu nehmen. Dies kann über einen Ventilator oder Drosselklappen erfolgen. Solche schaltbaren Drosselklappen können es darüber hinaus auch gestatten, individuell die Luftzufuhr oder Abfuhr einer Aufnahmeeinheit vollständig zu unterbrechen, was im Falle austretenden Gases zweckmäßig sein kann, um die Sauerstoffzufuhr zu einer möglicherweise schadhaften Batterieeinheit zu unterbinden.

Zum anderen erlaubt es ein Belüftungssystem, die Luftzusammensetzung im Bereich der Batterieeinheit zentral zu untersuchen. Gasentwicklung in mehreren Aufnahmeeinheiten kann somit durch nur einen Sensor erfasst werden. Wie bereits erläutert wurde, kann ein Luftkanal dieses Belüftungssystems genutzt werden, um für jeden Aufnahmebereich individuell mittels eines Gassensors die Zusammensetzung der aus dem Aufnahmebereich ausströmenden Luft zu analysieren. Vorzugsweise verfügt das Belüftungssystem aber zusätzlich über den erwähnten zentralen Gassensor, mit dem die aus mindestens zwei Aufnahmeeinheiten herausgeleitete Luft gemeinsam analysiert werden kann. Durch einen zentralen und mehrere dezentrale Gassensoren wird diesbezüglich Redundanz oder zumindest ein Indikator zur Fehlererkennung geschaffen.

Um auch den Ausfall der Luftabsaugung detektieren zu können, ist vorzugweise auch ein Strömungssensor vorgesehen, der innerhalb eines Luftkanals des Belüftungssystem angeordnet ist und so detektieren kann, ob und wie stark Luft hier hindurchströmt.

Zur Anbindung der Aufnahmebehälter an das Belüftungssystem im Laderaum ist vorzugsweise vorgesehen, dass das Belüftungssystem über einen ersten Belüftungsanschluss verfügt, der ortsfest zu einem Aufnahmebereich vorgesehen ist, und dass der Aufnahmebehälter zur Aufnahme im Aufnahmebereich über einen zweiten Belüftungsanschluss verfügt. Der erste und der zweite Belüftungsanschluss sind dabei derart am Aufnahmebereich einerseits und dem Aufnahmebehälter andererseits angeordnet, dass bei Anordnung des Aufnahmebehälters in einer Sollposition des Aufnahmebereichs der erste und der zweite Belüftungsanschluss kommunizierend miteinander verbunden sind.

Die Belüftungsanschlüsse auf Seiten des Aufnahmebereichs einerseits und auf Seiten des Aufnahmebehälters andererseits gestatten es so, alleine durch das Verbringen des Aufnahmebehälters in seine Sollposition die kommunizierende Verbindung zwischen den laderaumfesten Leitungen des Belüftungssystems und dem Aufnahmebehälter zu schaffen. Vorzugsweise sind die Belüftungsanschlüsse durch elastische Teilkomponenten in begrenztem Maße gegen eine ungenaue Positionierung des Aufnahmebehälters fehlertolerant.

Zur zentralen Auswertung von im Bereich der mehreren Aufnahmeeinheiten erhobenen Daten sind zwei Möglichkeiten vorgesehen, die auch in Kombination zweckmäßig sein können.

Es kann eine zentrale Auswerteeinheit vorgesehen sein, die mit mindestens zwei Sensoren zur Erfassung jeweils einer Zustandsgröße mindestens zweier Batterieeinheiten in mindestens zwei Aufnahmeeinheiten unmittelbar galvanisch verbunden ist, die mit mindestens zwei Anschlussvorrichtungen zum Anschluss an mindestens zwei Batterieeinheiten in mindestens zwei Aufnahmeeinheiten unmittelbar galvanisch verbunden ist und/oder die mit mindestens zwei Anschlussvorrichtungen zum Anschließen an die Polelemente mindestens zweier Batterieeinheiten in mindestens Aufnahmeeinheiten unmittelbar galvanisch verbunden ist.

Unter einer galvanischen Kopplung in diesem Sinne ist zu verstehen, dass die zentrale Auswerteeinheit, die zum dauerhaften Verbleib im Laderaum oder Fahrerhaus vorgesehen ist, unmittelbar mit den entweder an den Aufnahmebereichen oder in den Aufnahmebehältern vorgesehenen Sensoren verbunden ist bzw. mit den Polelementen der Batterieeinheiten unmittelbar verbunden ist. Hierdurch wird eine vergleichsweise einfache Gestaltung möglich, bei der die zentrale Auswerteeinheit unmittelbar Sensorwerte, insbesondere analoge Sensordaten, erfasst und/oder unmittelbar mit den Polelementen der Batterieeinheiten verbunden ist, so dass beispielsweise die Spannung durch die zentrale Auswerteeinheit selbst gemessen werden kann.

Bei einer anderen Gestaltung ist vorgesehen , dass jeder der Aufnahmeeinheiten eine dezentrale Auswerteeinheit zugeordnet ist, die vorzugsweise in den Aufnahmebehälter integriert ist, und die mit dem mindestens einen Sensor zur Erfassung einer Zustandsgröße der Batterieeinheiten in dieser Aufnahmeeinheit verbunden ist und/oder die mit der Anschlussvorrichtung zum Anschluss an die Batterieeinheiten in dieser Aufnahmeeinheit verbunden ist und/oder die mit der Anschlussvorrichtung zum Anschließen an die Polelemente der Batterieeinheit in dieser Aufnahmeeinheiten verbunden ist.

Bei einer solchen Gestaltung mit dezentralen Auswerteeinheiten, die den Aufnahmeeinheiten zugeordnet sind, findet eine zumindest teilweise Auswertung erfasster Daten oder Messwerte bereits im Bereich der Aufnahmeeinheit selbst statt. Hierdurch kann der Verkabelungsaufwand im Bereich des Laderaums verringert werden. Zudem kann vorgesehen werden, dass die dezentralen Auswerteeinheiten in die Aufnahmebehälter integriert sind, so dass sie für die Auswertung der Sensordaten spezifisch an den Typ der Batterieeinheit angepasster Sensoren konfiguriert sein können.

Zusätzlich zu den dezentralen Auswerteeinheiten ist eine zentrale Auswerteeinheit vorgesehen, die über Leitungen oder über eine Funkstrecke mit mindestens zwei dezentralen Auswerteeinheiten verbunden ist und die zur Verarbeitung von Daten oder Spannungen dieser mindestens zwei dezentralen Auswerteeinheiten ausgebildet ist.

Hierbei kommen grundsätzlich sowohl Sternverkabelungen in Frage, bei denen die zentrale Auswerteeinheit mit allen dezentralen Auswerteeinheiten direkt verbunden ist. Es kann aber auch zweckmäßig sein, hier ein Bussystem wie ein CAN-Bussystem zu verwendet, um den Verkabelungsaufwand zu reduzieren. Obwohl die Verbindung zwischen den dezentralen Auswerteeinheiten und der zentralen Auswerteeinheit vorzugsweise leitungsbasiert erfolgt, ist grundsätzlich auch eine Funkübertragung denkbar, beispielsweise über WLAN.

Die Stromversorgung der dezentralen Auswerteeinheiten oder anderweitiger Verbraucher im Bereich der Aufnahmeeinheiten wie insbesondere Sensoren erfolgt vorzugsweise über ein Bordnetz des Lastkraftwagens. Grundsätzlich möglich ist es aber auch, die Batterien selbst als Energieversorgung für Verbraucher im Bereich der Aufnahmeeinheiten zu nutzen. Dies ist jedoch nur in Ausnahmefällen zweckmäßig, da die Spannung von üblicherweise etwa 400V an solchen Batterieeinheiten dann auch eine dezentrale Transformation erforderlich macht.

Die zentrale Auswerteeinheit ist dafür ausgebildet, eingehende Daten von Sensoren der Aufnahmeeinheiten und/oder von mindestens einer Kamera im Aufnahmeraum und/oder gemessene Spannungen der Batterieeinheiten zu speichern und/oder über eine Schnittstelle, insbesondere eine Funkschnittstelle, an einen Empfänger in einem Führerhaus des Lastkraftwagens oder einer Zugmaschine zu senden.

Durch die Speicherung können Daten für die spätere Auswertung des Transportes und zu Dokumentationszwecken gesichert werden. Die Weitergabe der Daten an einen Empfänger im Führerhaus kann insbesondere bei einer erfindungsgemäßen Gestaltung eines Laderaums auf einem Anhänger oder Auflieger zweckmäßig sein, da in solchen Fällen eine Anzeigeeinrichtung oder dergleichen im Führerhaus zweckmäßigerweise von der zentralen Auswerteeinheit am Auflieger oder Anhänger getrennt wird.

Insbesondere bei der Realisierung eines erfindungsgemäßen Laderaums als Aufbau eines Lastkraftwagens kann es vorteilhaft sein, unmittelbar die zentrale Auswerteeinheit im Führerhaus vorzusehen und mit einer Anzeigeeinrichtung odgl. auszustatten und somit eine Trennung der zentralen Auswerteeinheit von einer Anzeigeeinrichtung zu Unterrichtung des Fahrers zu vermeiden.

Die Daten können derart von der zentralen Auswerteeinheit ausgewertet werden, dass in Reaktion hierauf Aktoren des Belüftungssystems oder anderweitige Aktoren im Bereich der Aufnahmeeinheit gesteuert werden und/oder Signalgeber für den Fahrer aktiviert werden. Die zentrale Auswerteeinheit kann insbesondere auf Messwerte reagieren, die ein Indikator dafür sind, dass an einer Batterieeinheit ein Schadensfall eingetreten ist. So kann beispielsweise beim Ausgasen der Batterieeinheit das Belüftungssystem als Ganzes oder im Bereich der betroffenen Aufnahmeeinheit deaktiviert werden und dem Fahrer der Störfall angezeigt werden. Eine andere Art eines von der Auswerteeinheit gesteuerten Aktors kann beispielsweise das Ventil eines Löschsystems sein, welches bei einem detektierten Brand in der fraglichen Aufnahmeeinheit Löschschaum oder dergleichen einströmen lässt.

Die zentrale Auswerteeinheit kann darüber hinaus auch genutzt werden, um einen nicht einwandfreien Beladevorgang zu erkennen. So kann exemplarisch in einem Falle, in dem der Aufnahmebehälter im Aufnahmebereich detektiert wird, jedoch keine Signale eines dem Aufnahmebehälter zugeordneten Sensors von der zentralen Auswerteeinheit empfangen werden, daraus rückgeschlossen werden, dass die Kontaktierung bzw. Verkabelung noch nicht in Ordnung ist. Dies kann dem Fahrer vor Beginn des Transports über einen Bildschirm oder dergleichen angezeigt werden.

Von Vorteil ist es weiterhin, wenn die zentrale Auswerteeinheit einen möglichen Schadensfall an einer Batterieeinheit auf Basis empfangener Spannungswerte oder Sensordaten derart klassifiziert, dass der Fahrer eine konkrete Handlungsanweisung erhält. Je nach Schadensfall können verschiedene Maßnahmen geboten sein bis hin zum Abstellen des Lkws in einer Position, in der durch einen möglichen Brand oder eine mögliche Explosion keine Menschen gefährdet sind.

Innerhalb des Aufnahmebehälters weist die Anschlussvorrichtung vorzugsweise zum Anschluss an die mindestens eine Batterieeinheit eine Steckerbuchse und/oder ein Kabel auf, und/oder zum Anschluss an die Polelemente der Batterieeinheit eine Steckerbuchse zum Anschluss eines Verbindungskabels auf.

Die Anbindung der Batterieeinheit an den Aufnahmebehälter durch eine oder mehrere Kabelverbindungen gewährleistet ein einfaches Verstauen der Batterieeinheit im Aufnahmebehälter. Die Batterieeinheit kann zunächst eingelegt und anschließend angeschlossen werden. Eine auf Seiten des Aufnahmebehälters vorgesehene Steckerbuchse ermöglicht es, in Abhängigkeit des Typs der Batterieeinheit verschiedene Kabel verwenden zu können. Auch hierdurch kann der Aufnahmebehälter für unterschiedliche Batterieeinheiten angepasst werden.

Zur Übertragung von Daten und/oder elektrischen Spannungen vom Aufnahmebehälter zur dezentralen oder zentralen Auswerteeinheit ist vorzugsweise im Aufnahmebereich eine Anschlussvorrichtung zum Anschluss an den Aufnahmebehälter vorgesehen, wobei die Anschlussvorrichtung ein Kabel zum Anschluss an den Aufnahmebehälter aufweist oder auf Seite des Aufnahmebehälters und auf Seite des Aufnahmebereichs korrespondierend angeordnete Kontaktflächen aufweist, die bei Anordnung des Aufnahmebehälters in einer Sollposition des Aufnahmebereichs galvanisch miteinander gekoppelt sind.

Dabei wird die Gestaltung mit Kontaktflächen als besonders vorteilhaft angesehen. Ähnlich der oben bereits beschriebenen Belüftungsanschlüsse kann erreicht werden, dass allein das Verbringen des Aufnahmebehälters in seine Sollposition zur galvanischen Kontaktierung führt. Um dennoch eine gewisse Lagetoleranz zuzulassen, werden vorzugsweise vergleichsweise große Kontaktflächen von jeweils insbesondere vorzugsweise mindestens 1 cm² vorgesehen. Weiterhin sind vorzugsweise die Kontaktflächen auf mindestens einer Seite fehlerbelastet auslenkbar.

Vorzugsweise ist zur gemeinsamen Überwachung mindestens zweier Aufnahmeeinheiten im Laderaum eine Kamera vorgesehen, insbesondere eine Wärmebildkamera. Durch eine Wärmebildkamera ist eine weitere Möglichkeit gegeben, einen Schadensfall an einer Batterieeinheit zu ermitteln. Eine solche Wärmebildkamera kann individuell für jede Batterieeinheit vorgesehen sein. Üblicherweise reicht jedoch die Verwendung einer oder weniger Wärmebildkameras zur Überwachung aller Aufnahmeeinheiten.

Der Aufnahmebehälter, der die Batterieeinheit aufnimmt und der vorzugsweise zur Aufnahme in einem hierfür vorgesehen Aufnahmebereich des Laderaums vorgesehen ist, verfügt vorzugsweise über Wandungen aus einem zellulosebasierten Material (Papier, Pappe) oder aus Metall oder leitfähigem Kunststoff, um die Massekontaktierung der Batterieeinheit mit dem Masseleiter des Lastkraftwagens zu gewährleisten. Die Wandungen sind vorzugsweise aus feuerhemmenden Material hergestellt, wobei insbesondere Hohlkammerwandungen aus schwer entflammbaren Material von Vorteil sind. Zur passiven oder aktiven Kühlung können an der Außenseite passive Kühlelemente in Form von Kühlrippen einschließlich anderweitiger oberflächenvergrößernder Kühlstrukturen und aktive Kühlelemente, insbesondere Ventilatoren oder Peltierelemente, vorgesehen sein.

Der Aufnahmebehälter weist vorzugsweise einen schalenartigen Grundkörper und einen Deckel auf. Bis auf ggf. vorhandene Belüftungsanschlüsse ist der Aufnahmebehälter vorzugsweise flüssigkeitsdicht verschließbar, so dass aus den Batterien im Schadensfalle austretende Flüssigkeit nicht in den Laderaum austreten kann.

Um den Aufnahmebehälter an Batterieeinheiten unterschiedlicher Bauart anpassen zu können, können die oben schon genannten Maßnahmen in Hinblick auf das Anschließen der Batterien an den Aufnahmebehälter vorgesehen sein. Austauschbare Kabel gestatten das Anschließen an Polelemente oder Sensoranschlüsse verschiedener Typen von Batterieeinheiten. Aufgrund der unterschiedlichen Außenmaße der Batterieeinheiten kann es zusätzlich von Vorteil sein, wenn im Aufnahmebehälter entnehmbare Einlegeteile, insbesondere aus Kunststoff, vorgesehen sind, mittels derer auch Batterieeinheiten, die den Innenraum des Aufnahmebehälter nicht vollständig ausfüllen, im Innenraum sicher fixierbarsind.

Die erfindungsgemäße Gestaltung ist insbesondere für großvolumige Batterieeinheiten vorgesehen, die in Kraftfahrzeugen, insbesondere Personenkraftwagen, im Bereich des Unterbodens verbaut werden. Diese Batterieeinheiten weisen üblicherweise mindestens Maße von 150 cm x 100 cm x 20 cm auf, so dass der Innenraum des Aufnahmebehälters mindestens diese Maße aufweist. Um auch größere Batterieeinheiten für große Limousinen und Geländewagen transportieren zu können, ist der entsprechende Innenraum des Aufnahmeraums oder des Aufnahmebehälters vorzugsweise mindestens mit Maßen von 200 cm x 130 cm x 30 cm ausgebildet.

Die Aufnahmeeinheiten, insbesondere die Aufnahmebereiche zur Aufnahme von jeweils einem Aufnahmebehälter, sind im Laderaum vorzugsweise in einer in Fahrzeuglängsrichtung des Lastkraftwagens ausgerichteten Reihe von Aufnahmeeinheiten angeordnet. Insbesondere wird es als vorteilhaft angesehen, wenn sechs oder sieben solche Aufnahmeeinheiten hintereinander angeordnet sind. Bei ausreichender Zuladungsmöglichkeit können zwei oder drei solche Reihen übereinander vorgesehen sein. Grundsätzlich können auch mehr als drei solche Ebenen vorgesehen sein. Aufgrund der Masse der Batterieeinheiten von mehreren Hundert Kilogramm werden derzeit jedoch maximal drei Ebenen bevorzugt.

Aufgrund der Anordnung der Aufnahmeeinheiten hintereinander und insbesondere in mehreren Ebenen wird ein Beladen und Entladen des Laderaums von der Seite als sinnvoll angesehen. Die Aufnahmebereiche verfügen daher vorzugsweise über bezogen auf den Laderaum seitliche Einschuböffnungen, die für ein Einschieben der Aufnahmebehälter in Fahrzeugquerrichtung ausgebildet sind. Um die Seite des Aufbaus öffnen zu können, ist der Laderaum seitlich vorzugweise durch mindestens eine Schiebetür hindurch zugänglich.

Um während des Transportes zu gewährleisten, dass die Aufnahmebehälter in ihrer Position verbleiben und nicht durch Erschütterungen verlagert werden, ist es von Vorteil, wenn der Laderaum über ein Arretiersystem verfügt, welches aktivierbar ist, um hierdurch einen Aufnahmebehälter in seinem Aufnahmebereich festzulegen.

Das Arretiersystem kann insbesondere mindestens ein im Aufnahmebereich geführt bewegliches Druckglied aufweisen, mittels dessen der Aufnahmebehälter gegen mindestens eine Gegenfläche gepresst werden kann.

Eine solche Ausgestaltung eines Arretiersystems ist vergleichsweise einfach zu realisieren. Bei den Druckgliedern kann es sich insbesondere um schwenkbewegliche Druckglieder handeln, die im Bereich einer Wandung des Aufnahmebereichs angeordnet sind und von dort zum Zwecke der Kraftbeaufschlagung ausgeschwenkt werden können. Statt einer solchen Festlegung über ein Druckglied können aber auch ausfahrbare Haltebolzen oder dergleichen vorgesehen sein, um eine formschlüssige Festlegung des Aufnahmebehälters zu ermöglichen.

Um eine hohe Positioniergenauigkeit zu erzielen, ist es von Vorteil, wenn das Arretiersystem als Arretier- und Positioniersystem ausgebildet ist, welches aktivierbar ist, um hierdurch des Aufnahmebehälter in eine Sollposition zu bewegen und dort festzulegen.

Ein solches Arretier- und Positioniersystem kann das Beladen des Laderaums sehr erleichtern, da die Aufnahmebehälter mittels eines Staplers nur ungefähr an die richtige Position auf dem Aufnahmebereich verbracht werden müssen, um dann durch das fest im Aufnahmebereich vorgesehene System in ihre Sollposition verlagert zu werden.

Von besonderem Vorteil ist es, wenn Leitschrägen oder dergleichen im Aufnahmebereich vorgesehen sind, so dass der Aufnahmebehälter durch ein Druckglied wie eine Schubnocke präzise in seine Sollposition gedrückt werden kann.

Von besonderem Vorteil ist es, wenn das Arretiersystem als gemeinsames Arretiersystem für mindestens zwei Aufnahmebehälter in mindestens zwei Aufnahmebereichen vorgesehen ist, wobei hierfür insbesondere Druckglieder an den mindestens zwei Aufnahmebereichen über pneumatisch gekoppelte Aktoren betätigt werden oder über eine mechanische Kopplung verbunden sind, so dass sie durch einen gemeinsamen Aktor, insbesondere einen pneumatischen Aktor, gemeinsam verlagerbar sind.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist.
Fig. 1 zeigt einen erfindungsgemäßen Lastkraftwagen mit erfindungsgemäßen Auflieger in einer schematischen Ansicht.
Fig. 2 zeigt drei übereinander angeordnete Aufnahmebereiche im Laderaum des Aufliegers.
Fig. 3 und 4 zeigen eine Kraftfahrzeug-Batterieeinheit sowie einen Aufnahmebehälter zur Aufnahme der Batterieeinheit und zur Anordnung in einem der in Fig. 2 gezeigten Aufnahmeräume.
Fig. 5 und 6 zeigen das Einsetzen der Batterieeinheit in den Aufnahmebehälter.
Fig. 7 und 8 zeigen die Arretierung des Aufnahmebehälters im Aufnahmeraum.

### DETAILLIERTE BESCHREIBUNG DES AUSFÜHRUNGSBEISPIELS

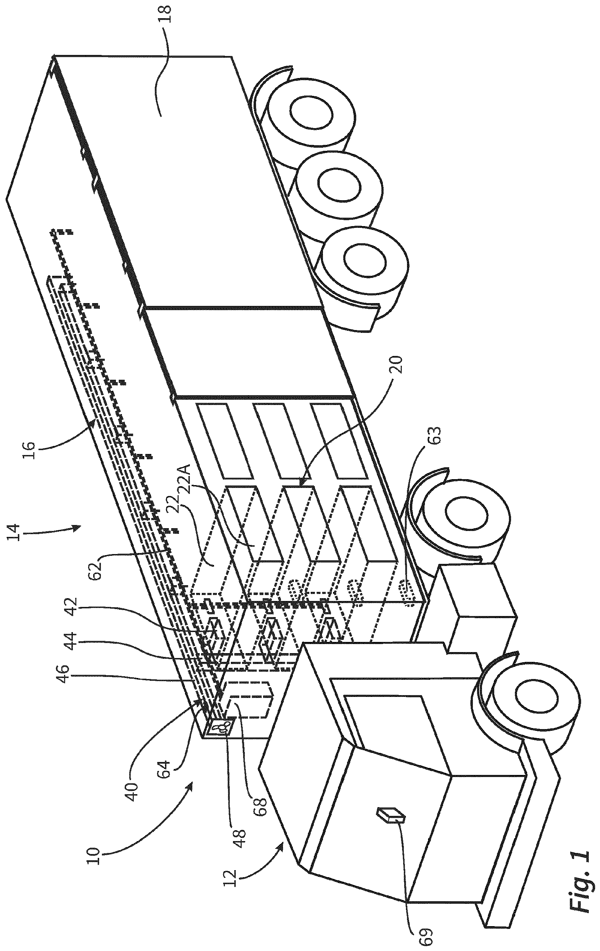

Fig. 1 zeigt einen erfindungsgemäßen Lastkraftwagen 10. Dieser verfügt über eine Zugmaschine 12 und einen Auflieger 14. Der Auflieger 14 ist für den Transport von Batterieeinheiten ausgebildet, die im Bereich des Unterbodens eines Elektroautos einzubauen sind. Diese Batterieeinheiten haben in etwa die Maße von 200 cm x 150 cm x 20 cm.

Der Auflieger 14 ist zum Transport von insgesamt 18 solchen Batterieeinheiten ausgebildet. Für jede Batterieeinheit verfügt der Auflieger 14 über eine Aufnahmeeinheit 20. Diese Aufnahmeeinheiten 20 weisen jeweils einen als Aufnahmeraum 22 ausgestalteten Aufnahmebereich 22 sowie einen bestimmungsgemäß hierin einzusetzenden Aufnahmebehälter 30 auf. Die insgesamt 18 Aufnahmeräume 22 sind derart angeordnet, dass jeweils drei Aufnahmeräume 22 übereinander angeordnet sind und jeweils sechs Aufnahmeräume 22 in Fahrzeuglängsrichtung hintereinander. Die Aufnahmeräume 22 sind jeweils an einer Seite mit einer Zugangsöffnung 22A versehen, durch die die Aufnahmebehälter 30 eingesetzt werden können. Die Zugangsöffnungen 22A weisen beim Lastkraftwagen 10 der Fig. 1 zur linken Fahrzeugseite hin und sind dort über zwei Schiebetore 18 verschließbar.

Die Aufnahmeräume 22 sind an ein zentrales Belüftungssystem 40 angeschlossen. Aus jedem Aufnahmeraum 22 führt ein Luftkanal 42 zu einem Vertikalkanal 44. Die insgesamt sechs Vertikalkanäle 44 sind stromabwärts mit einem Zentralkanal 46 verbunden, der an ein Ventilationssystem 48 angeschlossen ist.

Weiterhin sind die Aufnahmeeinheiten in im Weiteren noch erläuterter Weise mit einer zentralen Auswerteeinheit 68 verbunden, wobei hierfür Leitungen 62 von der zentralen Auswerteeinheit 68 zu den verschiedenen Aufnahmeeinheiten 20 führen. Ebenfalls mit der zentralen Auswerteeinheit 68 verbunden sind Wärmebildkameras 63 zur Erkennung von Wärmequellen und eine Sensoreinrichtung 64 im Zentralkanal 46 des Belüftungssystems 40 zur Analyse der hindurchströmenden Luft und/oder zum Prüfen des Betriebszustandes des Belüftungssystems 40. Bei der zentralen Auswerteeinheit 68 handelt es sich um einen Zentralcomputer, der eingehende Daten analysiert und auf Basis derer Maßnahmen in Hinblick auf die Weitergabe an den Fahrzeugführer oder auf automatisch ausgelöste Maßnahmen im Bereich der Aufnahmeeinheiten 20 trifft.

Die durch die zentrale Auswerteeinheit 68 erfassten Daten der Aufnahmeeinheiten 20 und der weiteren Sensoren 63, 65 sowie ggf. hieraus abgeleitete Daten werden bestimmungsgemäß über eine Kabelschnittstelle oder eine Funkschnittstelle an einen Empfänger 69 im Fahrerhaus weitergeleitet, so dass der Fahrer des Lastkraftwagens 10 die entsprechenden Daten ablesen kann und gegebenenfalls angemessen reagieren kann.

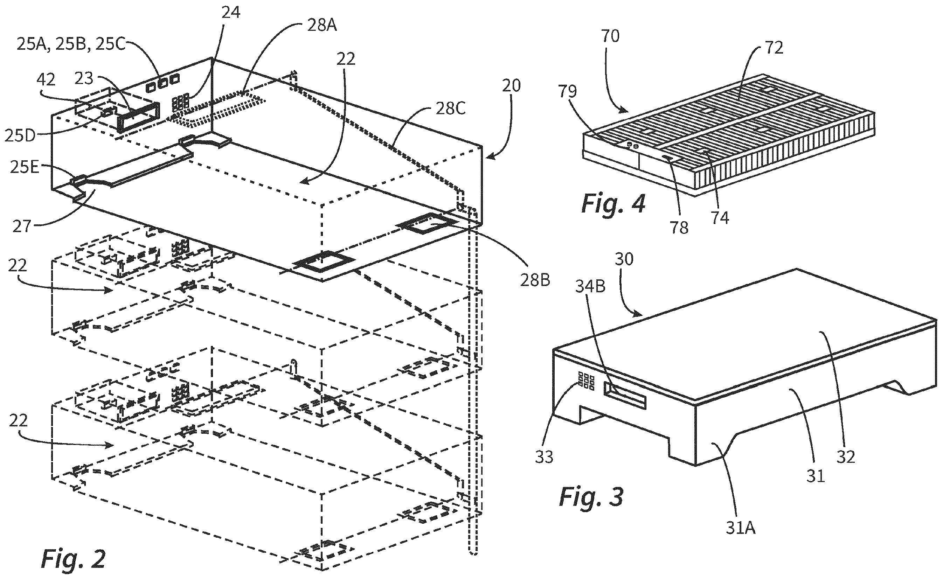

Fig. 2 zeigt drei Aufnahmeräume 22, die entsprechend der Darstellung der Fig. 1 übereinander angeordnet sind. Die Perspektive entspricht dabei jener der Fig. 1. Die Aufnahmeräume 22 sind jeweils zur Aufnahme eines Aufnahmebehälters 30 ausgebildet, der in Fig. 3 dargestellt ist, und auf den im Weiteren Bezug genommen wird.

An der der Zugangsöffnung 22A gegenüberliegenden Stirnseite des Aufnahmeraums 22 ist der schon genannte Luftkanal 42 vorgesehen, der über einen Belüftungsanschluss 23 in den Aufnahmeraum mündet. In diesem Luftkanal 42 ist ein Gassensor 25D angeordnet ist. Weitere Sensoren 25A bis 25C, beispielsweise ein Temperatursensor, ein Rauchdetektor oder ein weiterer Gassensor, können ebenfalls an dieser Stirnseite oder einer anderen Wandung des Aufnahmeraums 22 angeordnet sein. Neben dem Belüftungsanschluss 23 sind an der genannten Stirnseite Kontaktflächen 24 vorgesehen.

Korrespondierend zum Belüftungsanschluss 23 und den Kontaktflächen 24 sind am Aufnahmebehälter 30 ebenfalls Kontaktflächen 33 zur Übermittlung elektrischer Signale sowie ein Belüftungsanschluss 34B eines Entlüftungskanals vorgesehen. Wenn der Aufnahmebehälter 30 bestimmungsgemäß in den Aufnahmebereich eingeschoben wird, so gelangen diese jeweils in Kontakt mit den korrespondierenden Elementen im Aufnahmeraum 22, so dass eine kommunizierende Verbindung zwischen dem Entlüftungskanal und dem Luftkanal und eine galvanische Kopplung zwischen den Kontaktflächen 24, 33 geschaffen wird.

Zum Zwecke der richtigen Positionierung und der Erfassbarkeit der Positionierung ist an der Stirnseite eine Einführhilfe für Füße 31A des Aufnahmebehälters und Sensoren 25E zur Erfassung der korrekten Positionierung vorgesehen. Um den Aufnahmebehälter 30 mit geringem Aufwand in seine Sollposition bringen zu können und dort fixieren zu können, sind Druckglieder 28A, 28B an der Oberseite bzw. Unterseite des Aufnahmeraums 22 vorgesehen, die in im Weiteren noch erläuterter Weise gemeinsam verlagert werden können. Sie sind hierfür über eine Druckstrebe 28C gekoppelt.

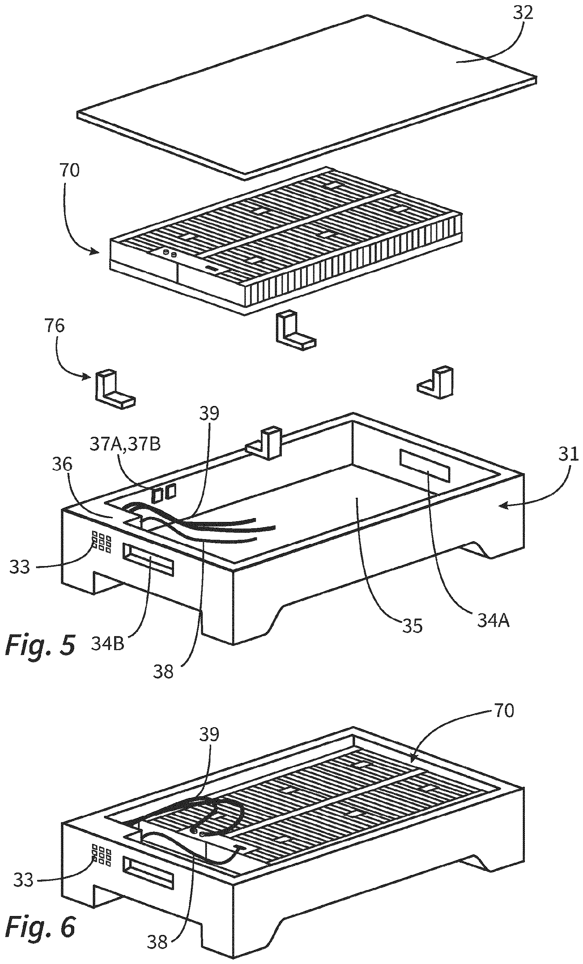

Der bereits erwähnte Aufnahmebehälter 30, der in Fig. 3 dargestellt ist, dient der Aufnahme einer Batterieeinheit 70. Er besteht zu diesem Zweck aus einem schalenartigen Unterteil 31 mit Füßen 31B, die ein Anheben mittels eines Staplers gestatten, und einem Deckel 32. Details zum inneren Aufbau ergeben sich aus Fig. 5.

Die aufzunehmende Batterieeinheit 70 ist in Fig. 4 dargestellt. Es handelt sich um einen Verbund aus einer Vielzahl von Einzelzellen, die in nicht näher dargestellter Art und Weise miteinander verschaltet sind. In die Batterieeinheit 70 integriert sind Temperatursensoren 74, die über einen Anschluss 78 abgefragt werden können. Weiterhin weist die Batterieeinheit zwei Polelemente 79 auf, über die im Betrieb die Leistungsabgabe erfolgt.

Die Fig. 5 und 6 verdeutlichen die Innengestaltung des Aufnahmebehälters 30 sowie die Aufnahme der Batterieeinheit 70 im Innenraum 35 des Aufnahmebehälters 30. In Fig. 5 ist ersichtlich, dass der Aufnahmebehälter 30 auch über innen liegende Sensoren 37A, 37B verfügen kann. Weiterhin verfügt der Aufnahmebehälter 30 über Kabelleitungen 39 zum Anschluss an die Polelemente 79 der Batterieeinheit sowie ein Anschlusskabel 38 zum Verbinden mit der batterieeinheitsseitigen Steckerbuchse 78. In nicht näher dargestellter Weise können die Kabel 38, 39 mittels lösbarer Steckverbinder mit dem Aufnahmebehälter 30 verbunden sein, so dass sie gegen andere Kabel ausgetauscht werden können, wenn ein anderer Typ von Batterieeinheiten verstaut werden soll. Ebenfalls zur Anpassung des Aufnahmebehälters an die konkreten Maße der Batterieeinheit 70 sind entnehmbare Einlegeteile 76 vorgesehen, welche dafür sorgen, dass die Batterieeinheit 70 weitgehend spielfrei im Innenraum 35 verstaut werden kann.

Auf der dem Auslasskanal gegenüberliegenden Stirnseite des Aufnahmebehälters 30 ist ein Einlasskanal 34A vorgesehen, der vorliegend mittels eines Filters verschlossen ist, um das Eindringen von Verunreinigungen zu verhindern.

Die mittels der Sensoren 37A, 37B erfassten Sensordaten sowie die mittels der batterieseitigen Sensoren 74 über das Kabel 38 erfassten Sensordaten und die an den Polelementen 79 anliegende Spannung können von einer in den Aufnahmebehälter 30 integrierten dezentralen Auswerteeinheit 36 ausgewertet werden und in bereits ausgewerteter und insbesondere digitaler Form über die Kontaktflächen 33 an die zentrale Auswerteeinheit 68 und den Empfänger 69 im Fahrerhaus weitergegeben werden. Alternativ kann die dezentrale Auswerteeinheit auch in den Aufnahmeraum integriert sein und somit eine technisch einfachere Form des Aufnahmebehälters gestatten.

Weiterhin ist es möglich, auf eine solche dezentrale Auswerteeinheit zu verzichten und die über die Sensoren oder an den Polelementen erfassten Daten unmittelbar zur Auswertung an die zentrale Auswerteeinheit 68 weiterzugeben.

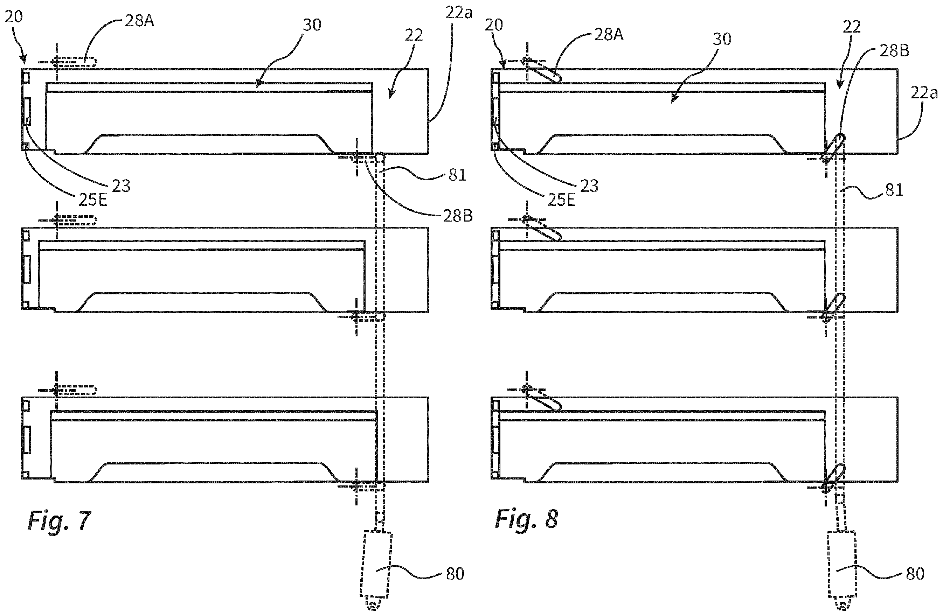

Die Fig. 7 und 8 verdeutlichen die Funktionsweise des Positionier- und Arretiersystems, dessen wichtigste Elemente die schwenkbaren Druckglieder 28A, 28B sind. Die Fig. 7 und 8 verdeutlichen den Beladungsvorgang.

Fig. 7 zeigt einen Zustand, nachdem die Aufnahmebehälter 30 mittels eines Staplers in die Aufnahmeräume 22 eingeführt worden sind. Die Aufnahmebehälter 30 sind jeweils noch nicht in der Sollposition angeordnet, in der die Kontaktflächen 33, 24 einander berühren und die Belüftungsanschlüsse 34B, 23 eine kommunizierende Verbindung bilden. Zudem sind die Aufnahmebehälter 30 jeweils in unterschiedlicher Position im Aufnahmeraum 22 angeordnet.

Ausgehend von dieser Situation der Fig. 7 wird das Positionier- und Arretiersystem aktiviert und hierdurch ein Pneumatikkolben 80 ausgefahren, der über eine Kopplungsstange 81 mechanisch mit den Druckgliedern 28A, 28B gekoppelt ist. Wie sich anhand der Fig. 8 ersehen lässt, bewirken die Druckglieder 28B, dass die Aufnahmebehälter 30 bezogen auf die Perspektive der Fig. 8 nach links verschoben werden. Durch die in Fig. 2 dargestellten Einführhilfen 27 wird dabei gewährleistet, dass sie auch in Querrichtung ihre Sollposition erreichen. Die aufgrund mechanischer Kopplung gleichzeitig nach unten schwenkenden Druckglieder 28A sorgen in dieser Position für eine Fixierung, so dass in dem während des Transportes verbleibenden Zustand der Fig. 8 eine insgesamt sichere Lagefixierung der Aufnahmebehälter 30 gegeben ist.

## Patentansprüche

1. Lastkraftwagen (10), Anhänger für einen Lastkraftwagen oder Auflieger (14) für einen Lastkraftwagen (10) mit den folgenden Merkmalen:
a. der Lastkraftwagen (10), der Anhänger bzw. der der Auflieger (14) verfügt über einen Laderaum (16), und
b. der Laderaum (16) verfügt über eine Mehrzahl von Aufnahmeeinheiten (20) zur Aufnahme von Batterieeinheiten (70) als Nutzlast, und
**gekennzeichnet dadurch, dass**
c. jede Aufnahmeeinheit (20) umfasst einen fest in die Struktur des Laderaums integrierten Aufnahmebereich (22) und einen zur Aufnahme in diesen Aufnahmebereich (22) vorgesehenen Aufnahmebehälter (30), der wiederum zur Aufnahme der Batterieeinheit (70) vorgesehen ist, und
d. jede Aufnahmeeinheit (20) ist
- mit mindestens einem Sensor (25A-25D, 37A-B) zur Erfassung einer Zustandsgröße der darin aufgenommenen Batterieeinheit (70) ausgerüstet und/oder
- mit mindestens einer Anschlussvorrichtung (38) zum Anschluss an die Batterieeinheit (70) und zum Anschluss an mindestens einen in die Batterieeinheit integrierten Sensor (74) zur Erfassung einer Zustandsgröße der Batterieeinheit (70) ausgerüstet und/oder
- mit mindestens einer Anschlussvorrichtung (39) zum Anschließen an Polelemente (79) der Batterieeinheit (70) zum Zwecke der Spannungsüberwachung ausgerüstet.

2. Lastkraftwagen (10), Anhänger oder Auflieger (14) nach Anspruch 1 mit dem folgenden Merkmal:
a. jede Aufnahmeeinheit (20) ist mit einem Gas-Sensor (25D, 37A) zur Erfassung der Zustandsgröße der Zusammensetzung der Luft ausgestattet,
vorzugsweise mit einem der folgenden zusätzlichen Merkmale:
b. der Gas-Sensor (37A) ist innerhalb des entnehmbaren Aufnahmebehälters angeordnet und/oder
c. der Gas-Sensor (25D) ist in einem aus dem Aufnahmebereich (22) herausführenden Luftkanal (42) angeordnet.

3. Lastkraftwagen (10), Anhänger oder Auflieger (14) nach Anspruch 1 oder 2 mit dem folgenden Merkmal:
a. jedem Aufnahmebereich (22) ist ein Sensor (25E) zur Erfassung des Vorhandenseins eines Aufnahmebehälters (30) und/oder zur Erfassung der Position des Aufnahmebehälters (30) zugeordnet.

4. Lastkraftwagen (10), Anhänger oder Auflieger (14) nach einem der vorstehenden Ansprüche mit dem folgenden Merkmal:
a. es ist ein Belüftungssystem (40) vorgesehen, mittels dessen Luft aus den Aufnahmeeinheiten (20) herausgeleitet und/oder den Aufnahmeeinheiten (20) zugeführt werden kann,
vorzugsweise mit mindestens einem der folgenden zusätzlichen Merkmale:
b. das Belüftungssystem (40) verfügt über einen Gas-Sensor (64), mit dem die aus mindestens zwei Aufnahmeeinheiten (20) herausgeleitete Luft gemeinsam analysiert werden kann, und/oder
c. das Belüftungssystem (40) verfügt über eine Temperaturregelung, mittels derer die Temperatur der den Aufnahmeeinheiten (20) zugeführten Luft einstellbar ist, vorzugsweise individuell für jede Aufnahmeeinheit.

5. Lastkraftwagen (10), Anhänger oder Auflieger (14) nach einem der vorstehenden Ansprüche mit den folgenden Merkmalen:
a. das Belüftungssystem (40) verfügt über einen ersten Belüftungsanschluss (23), der ortsfest zu einem Aufnahmebereich (22) vorgesehen ist, und
b. der Aufnahmebehälter (30) zur Aufnahme im Aufnahmebereich (22) verfügt über einen zweiten Belüftungsanschluss (34B), und
c. der erste und der zweite Belüftungsanschluss (23, 34B) sind derart am Aufnahmebereich (22) einerseits und dem Aufnahmebehälter (30) andererseits angeordnet, dass bei Anordnung des Aufnahmebehälters (30) in einer Sollposition des Aufnahmebereichs (22) der erste und der zweite Belüftungsanschluss (23, 34B) kommunizierend miteinander verbunden sind.

6. Lastkraftwagen (10), Anhänger oder Auflieger (14) nach einem der vorstehenden Ansprüche mit dem folgenden Merkmal:
a. es ist eine zentrale Auswerteeinheit (68) vorgesehen,
- die mit mindestens zwei Sensoren (25A-25D, 37A-B) zur Erfassung jeweils einer Zustandsgröße mindestens zweier Batterieeinheiten in mindestens zwei Aufnahmeeinheiten unmittelbar galvanisch verbunden ist und/oder
- die mit mindestens zwei Anschlussvorrichtungen (38) zum Anschluss an mindestens zwei Batterieeinheiten (70) in mindestens zwei Aufnahmeeinheiten (20) unmittelbar galvanisch verbunden ist und/oder
- die mit mindestens zwei Anschlussvorrichtungen (39) zum Anschließen an die Polelemente (79) mindestens zweier Batterieeinheiten (70) in mindestens zwei Aufnahmeeinheiten (20) unmittelbar galvanisch verbunden ist.

7. Lastkraftwagen (10), Anhänger oder Auflieger (14) nach einem der vorstehenden Ansprüche mit den folgenden Merkmalen:
a. jeder der Aufnahmeeinheiten (20) ist eine dezentrale Auswerteeinheit (36) zugeordnet, die vorzugsweise in den Aufnahmebehälter (30) integriert ist, und
- die mit dem mindestens einen Sensoren (37A, 37B) zur Erfassung einer Zustandsgröße der Batterieeinheiten (70) in dieser Aufnahmeeinheit (20) verbunden ist und/oder
- die mit der Anschlussvorrichtung (38) zum Anschluss an die Batterieeinheiten (70) in dieser Aufnahmeeinheit (20) verbunden ist und/oder
- die mit der Anschlussvorrichtung (39) zum Anschließen an die Polelemente (79) der Batterieeinheit (70) in dieser Aufnahmeeinheiten (20) verbunden ist, und
b. es ist eine zentrale Auswerteeinheit (68) vorgesehen, die über Leitungen (62) mit mindestens zwei dezentralen Auswerteeinheiten (36) verbunden ist und die zur Verarbeitung von Daten oder Spannungen dieser mindestens zwei dezentralen Auswerteeinheiten (36) ausgebildet ist.

8. Lastkraftwagen (10), Anhänger oder Auflieger (14) nach einem der Ansprüche 6 oder 7 mit dem folgenden Merkmal:
a. die zentrale Auswerteeinheit (68) ist dafür ausgebildet, eingehende Daten von Sensoren (25A-25E, 37A, 37B, 74) der Aufnahmeeinheiten (20) und/oder von mindestens einer Kamera (63) im Aufnahmebereich (22) und/oder gemessene Spannungen der Batterieeinheiten (70)
- zu speichern und/oder
- über eine Schnittstelle, insbesondere eine Funkschnittstelle, an einen Empfänger (69) in einem Führerhaus des Lastkraftwagens oder einer Zugmaschine zu senden, und/oder
- derart auszuwerten und weiterzuverarbeiten, dass in Reaktion hierauf Aktoren des Belüftungssystems oder anderweitige Aktoren im Bereich der Aufnahmeeinheit (20) gesteuert werden und/oder
- derart auszuwerten und weiterzuverarbeiten, dass in Reaktion hierauf Signalgeber für den Fahrer aktiviert werden.

9. Lastkraftwagen (10), Anhänger oder Auflieger (14) nach einem der vorstehenden Ansprüche mit mindestens einem der folgenden Merkmale:
a. innerhalb des Aufnahmebehälters (30) weist die Anschlussvorrichtung zum Anschluss an die mindestens eine Batterieeinheit eine Steckerbuchse und/oder ein (38) Kabel auf, und/oder
b. innerhalb des Aufnahmebehälters (30) weist die Anschlussvorrichtung zum Anschluss an die Polelemente (79) der Batterieeinheit (70) eine Steckerbuchse zum Anschluss eines Verbindungskabels (39) auf, und/oder
c. im Aufnahmebereich (22) ist eine Anschlussvorrichtung (24) zum Anschluss an den Aufnahmebehälter (30) vorgesehen, wobei die Anschlussvorrichtung ein Kabel zum Anschluss an den Aufnahmebehälter aufweist und/oder auf Seite des Aufnahmebehälters (30) und auf Seite des Aufnahmebereichs (22) korrespondierend angeordnete Kontaktflächen (24, 33) aufweist, so dass durch Anordnung des Aufnahmebehälters (30) in einer Sollposition des Aufnahmebereichs (22) eine galvanische Kopplung der Kontaktflächen (24, 33) erzielbar ist.

10. Lastkraftwagen (10), Anhänger oder Auflieger (14) nach einem der vorstehenden Ansprüche mit mindestens einem der folgenden Merkmale:
a. zur gemeinsamen Überwachung mindestens zweier Aufnahmeeinheiten ist im Laderaum (16) eine Kamera (63) vorgesehen, insbesondere eine Wärmebildkamera (63).

11. Lastkraftwagen (10), Anhänger oder Auflieger (14) nach einem der vorstehenden Ansprüche mit mindestens einem der folgenden Merkmale:
a. die Aufnahmebehälter (30) verfügen über Wandungen aus einem zellulosebasierten Material, aus Metall oder aus leitfähigem Kunststoff, und/oder
b. die Aufnahmebehälter (30) verfügen über Wandungen aus feuerhemmenden Material, und/oder
c. die Aufnahmebehälter (30) verfügen an der Außenseite über passive Kühlelemente in Form von Kühlrippen und/oder über mindestens ein aktives Kühlelemente, insbesondere einen Ventilator, und/oder
d. die Aufnahmebehälter (30) sind bis auf ggf. vorhandene Belüftungsanschlüsse (34A, 34B) flüssigkeitsdicht verschließbar, und/oder
e. im Aufnahmebehälter (30) sind entnehmbare Anpassungsstücke (76) vorgesehen, um die Batterieeinheit (70) im Innenraum (35) des Aufnahmebehälters (30) zu stützen.

12. Lastkraftwagen (10), Anhänger oder Auflieger (14) nach einem der vorstehenden Ansprüche mit mindestens einem der folgenden Merkmale:
a. im Laderaum (16) sind die Aufnahmeeinheiten (20) in Form mindestens einer Reihe von in Fahrzeuglängsrichtung hintereinander angeordneten Aufnahmeeinheiten (20) angeordnet, wobei insbesondere vorzugsweise zwei oder drei Reihen von Aufnahmeeinheiten (20) in Fahrzeughochrichtung übereinander vorgesehen sind, und/oder
b. der Aufnahmebehälter (30) ist zur Aufnahme einer Batterieeinheit (70) von mindestens 150 cm × 100 cm × 20 cm ausgebildet, insbesondere zur Aufnahme einer Batterieeinheit (70) von mindestens 200 cm × 130 cm × 30 cm, und/oder
c. die Aufnahmebereiche verfügen über bezogen auf den Laderaum (16) seitliche Einschuböffnungen, die für ein Einschieben der Aufnahmebehälter (30) in Fahrzeugquerrichtungausgebildetsind, und/oder
d. der Laderaum ist seitlich durch mindestens eine Schiebetür (18) hindurch zugänglich.

13. Lastkraftwagen (10), Anhänger oder Auflieger (14) nach einem der vorstehenden Ansprüche mit dem folgenden Merkmal:
a. der Laderaum (16) verfügt über ein Arretiersystem, welches aktivierbar ist, um hierdurch einen Aufnahmebehälter in seinem Aufnahmebereich festzulegen,
vorzugsweise mit mindestens einem der folgenden zusätzlichen Merkmale:
b. das Arretiersystem umfasst ein im Aufnahmebereich (22) geführt bewegliches Druckglied (28A, 28B), mittels dessen der Aufnahmebehälter (30) gegen mindestens eine Gegenfläche gepresst werden kann, und/oder
c. das Arretiersystem ist als Arretier- und Positioniersystem ausgebildet, welches aktivierbar ist, um hierdurch des Aufnahmebehälter (30) in eine Sollposition zu bewegen und dort festzulegen, und/oder
d. das Arretiersystem ist als gemeinsames Arretiersystem für mindestens zwei Aufnahmebehälter (30) in mindestens zwei Aufnahmebereichen (22) vorgesehen, wobei hierfür insbesondere Druckglieder (28A, 28B) an den mindestens zwei Aufnahmebereichen (22) über pneumatisch gekoppelte Aktoren betätigt werden oder über eine mechanische Kopplung (28C) verbunden sind, so dass sie durch einen gemeinsamen Aktor (80) gemeinsam verlagerbar sind.

## Claims

1. Truck (10), trailer for a truck or semitrailer (14) for a truck (10), having the following features:
a. the truck (10), the trailer or the semitrailer (14) has a loading space (16), and
b. the loading space (16) has a plurality of holding units (20) for holding battery units (70) as a payload, and
**characterized in that**
c. each holding unit (20) comprises a holding region (22) fixedly integrated into the structure of the loading space, and a holding container (30) provided to be held in this holding region (22), which in turn is provided to hold the battery unit (70), and
d. each holding unit (20)
- is equipped with at least one sensor (25A-25D, 37A-B) for detecting a state variable of the battery unit (70) held therein, and/or
- is equipped with at least one connecting device (38) to be connected to the battery unit (70) and to be connected to at least one sensor (74) integrated into the battery unit for detecting a state variable of the battery unit (70), and/or
- is equipped with at least one connecting device (39) to be connected to terminal elements (79) of the battery unit (70) for the purpose of voltage monitoring.

2. Truck (10), trailer or semitrailer (14) according to Claim 1, having the following feature:
a. each holding unit (20) is equipped with a gas sensor (25D, 37A) for detecting the state variable of the composition of the air,
preferably having one of the following additional features:
b. the gas sensor (37A) is arranged inside the removable holding container, and/or
c. the gas sensor (25D) is arranged in an air duct (42) leading out of the holding region (22).

3. Truck (10), trailer or semitrailer (14) according to Claim 1 or 2, having the following feature:
a. each holding region (22) is assigned a sensor (25E) for detecting the presence of a holding container (30) and/or for detecting the position of the holding container (30).

4. Truck (10), trailer or semitrailer (14) according to one of the preceding claims, having the following feature:
a. a ventilation system (40) is provided, by means of which air can be led out of the holding units (20) and/or supplied to the holding units (20),
preferably having at least one of the following additional features:
b. the ventilation system (40) has a gas sensor (64), with which the air led out of at least two holding units (20) can be analysed jointly, and/or
c. the ventilation system (40) has a temperature control system, by means of which the temperature of the air supplied to the holding units (20) can be adjusted, preferably individually for each holding unit.

5. Truck (10), trailer or semitrailer (14) according to one of the preceding claims, having the following features:
a. the ventilation system (40) has a first ventilation connection (23), which is provided in a fixed location relative to a holding region (22), and
b. the holding container (30) to be held in the holding region (22) has a second ventilation connection (34B), and
c. the first and the second ventilation connection (23, 34B) are arranged on the holding region (22), on the one hand, and on the holding container (30), on the other hand, in such a way that when the holding container (30) is arranged in an intended position of the holding region (22), the first and the second ventilation connection (23, 34B) are connected so as to communicate with each other.

6. Truck (10), trailer or semitrailer (14) according to one of the preceding claims, having the following feature:
a. a central evaluation unit (68) is provided,
- which is directly electrically connected to at least two sensors (25A-25D, 37A-B) for detecting a respective state variable of at least two battery units in at least two holding units, and/or
- which is directly electrically connected to at least two connecting devices (38) to be connected to at least two battery units (70) in at least two holding units (20), and/or
- which is directly electrically connected to at least two connecting devices (39) to be connected to the terminal elements (79) of at least two battery units (70) in at least two holding units (20).

7. Truck (10), trailer or semitrailer (14) according to one of the preceding claims, having the following features:
a. each of the holding units (20) is assigned a decentralized evaluation unit (36), which is preferably integrated into the holding container (30), and
- which is connected to the at least one sensor (37A, 37B) for detecting a state variable of the battery units (70) in this holding unit (20), and/or
- which is connected to the connecting device (38) to be connected to the battery units (70) in this holding unit (20), and/or
- which is connected to the connecting device (39) to be connected to the terminal elements (79) of the battery unit (70) in these holding units (20), and
b. a central evaluation unit (68) is provided, which is connected via leads (62) to at least two decentralized evaluation units (36) and which is designed to process data or voltages from these at least two decentralized evaluation units (36).

8. Truck (10), trailer or semitrailer (14) according to either of Claims 6 and 7, having the following feature:
a. the central evaluation unit (68) is designed to treat incoming data from sensors (25A-25E, 37A, 37B, 74) of the holding units (20) and/or from at least one camera (63) in the holding region (22) and/or measured voltages of the battery units (70) in the following way(s):
- to store it, and/or
- to transmit it via an interface, in particular a radio interface, to a receiver (69) in a driver's cab of the truck or a traction machine, and/or
- to evaluate and process it further in such a way that actuators of the ventilation system or other actuators in the region of the holding unit (20) are controlled in reaction thereto, and/or
- to evaluate and process it further in such a way that signal transmitters for the driver are activated in reaction thereto.

9. Truck (10), trailer or semitrailer (14) according to one of the preceding claims, having at least one of the following features:
a. inside the holding container (30), the connecting device to be connected to the at least one battery unit has a plug socket and/or a cable (38), and/or
b. inside the holding container (30), the connecting device to be connected to the terminal elements (79) of the battery unit (70) has a plug socket to be connected to a connecting cable (39), and/or
c. in the holding region (22), a connecting device (24) to be connected to the holding container (30) is provided, wherein the connecting device has a cable to be connected to the holding container and/or has correspondingly arranged contact surfaces (24, 33) on the holding container (30) and on the holding region (22), so that electrical coupling of the contact surfaces (24, 33) can be achieved by arranging the holding container (30) in an intended position of the holding region (22).

10. Truck (10), trailer or semitrailer (14) according to one of the preceding claims, having at least one of the following features:
a. a camera (63), in particular a thermal imaging camera (63) is provided in the loading space (16) for the joint monitoring of at least two holding units.

11. Truck (10), trailer or semitrailer (14) according to one of the preceding claims, having at least one of the following features:
a. the holding containers (30) have walls of a cellulose-based material, of metal or of conductive plastic, and/or
b. the holding containers (30) have walls of fire-retardant material, and/or
c. the holding containers (30) have passive cooling elements on the outside in the form of cooling ribs and/or at least one active cooling element, in particular a fan, and/or
d. the holding containers (30) can be closed in a fluid-tight manner apart from ventilation connections (34A, 34B) which may be present, and/or
e. removable adapters (76) are provided in the holding container (30) in order to support the battery unit (70) in the interior (35) of the holding container (30).

12. Truck (10), trailer or semitrailer (14) according to one of the preceding claims, having at least one of the following features:
a. in the loading space (16), the holding units (20) are arranged in the form of at least one row of holding units (20) arranged one behind another in the vehicle longitudinal direction, wherein in particular preferably two or three rows of holding units (20) are provided one above another in the vehicle vertical direction, and/or
b. the holding container (30) is designed to hold a battery unit (70) of at least 150 cm x 100 cm x 20 cm, in particular to hold a battery unit (70) of at least 200 cm x 130 cm x 30 cm, and/or
c. the holding regions have lateral insertion openings in relation to the loading space (16), which are designed for the holding containers (30) to be inserted in the vehicle transverse direction, and/or
d. the loading space is accessible from the side through at least one sliding door (18).

13. Truck (10), trailer or semitrailer (14) according to one of the preceding claims, having the following feature:
a. the loading space (16) has a locking system which can be activated in order thereby to fix a holding container in its holding region,
preferably having at least one of the following additional features:
b. the locking system comprises a movable pressure element (28A, 28B) guided in the holding region (22), by means of which the holding container (30) can be pressed against at least one opposing surface, and/or
c. the locking system is designed as a locking and positioning system, which can be activated in order thereby to move the holding container (30) into an intended position and to fix it there, and/or
d. the locking system is provided as a common locking system for at least two holding containers (30) in at least two holding regions (22), wherein, for this purpose, in particular pressure elements (28A, 28B) on the at least two holding regions (22) are actuated via pneumatically coupled actuators or are connected via a mechanical coupling (28C), so that they can be displaced jointly by a common actuator (80).

## Revendications

1. Poids lourd (10), remorque pour un poids lourd ou semi-remorque (14) pour un poids lourd (10) présentant les caractéristiques suivantes :
a. le poids lourd (10), la remorque ou la semi-remorque (14) comporte un espace de chargement (16), et
b. l'espace de chargement (16) comporte une pluralité d'unités de réception (20) servant à la réception d'unités de batterie (70) en tant que charge utile, et
**caractérisé en ce que**
c. chaque unité de réception (20) comprend une région de réception (22) intégrée fixement dans la structure de l'espace de chargement et un contenant de réception (30) prévu pour la réception dans cette région de réception (22), lequel récipient est pour sa part prévu pour la réception de l'unité de batterie (70), et
d. chaque unité de réception (20) est
- équipée d'au moins un capteur (25A-25D, 37A-B) servant à la détection d'une grandeur d'état de l'unité de batterie (70) reçue dans celle-ci et/ou
- équipée d'au moins un dispositif de connexion (38) servant à la connexion à l'unité de batterie (70) et à la connexion à au moins un capteur (74) intégré dans l'unité de batterie et servant à la détection d'une grandeur d'état de l'unité de batterie (70) et/ou
- équipée d'au moins un dispositif de connexion (39) servant à la connexion à des éléments polaires (79) de l'unité de batterie (70) à des fins de surveillance de la tension.

2. Poids lourd (10), remorque ou semi-remorque (14) selon la revendication 1 présentant la caractéristique suivante :
a. chaque unité de réception (20) est dotée d'un capteur de gaz (25D, 37A) servant à la détection de la grandeur d'état de la composition de l'air,
de préférence présentant l'une des caractéristiques supplémentaires suivantes :
b. le capteur de gaz (37A) est disposé à l'intérieur du contenant de réception amovible et/ou
c. le capteur de gaz (25D) est disposé dans un canal d'air (42) sortant de la région de réception (22).

3. Poids lourd (10), remorque ou semi-remorque (14) selon la revendication 1 ou 2 présentant la caractéristique suivante :
a. un capteur (25E) servant à la détection de la présence d'un contenant de réception (30) et/ou à la détection de la position du contenant de réception (30) est associé à chaque région de réception (22).

4. Poids lourd (10), remorque ou semi-remorque (14) selon l'une des revendications précédentes présentant la caractéristique suivante :
a. il est prévu un système de ventilation (40) au moyen duquel de l'air peut être guidé hors des unités de réception (20) et/ou acheminé aux unités de réception (20),
de préférence présentant au moins l'une des caractéristiques supplémentaires suivantes :
b. le système de ventilation (40) comporte un capteur de gaz (64), à l'aide duquel l'air guidé hors d'au moins deux unités de réception (20) peut être analysé conjointement, et/ou
c. le système de ventilation (40) comporte une régulation de température au moyen de laquelle la température de l'air acheminé aux unités de réception (20) peut être réglée, de préférence individuellement pour chaque unité de réception.

5. Poids lourd (10), remorque ou semi-remorque (14) selon l'une des revendications précédentes présentant les caractéristiques suivantes :
a. le système de ventilation (40) comporte une première connexion de ventilation (23) qui est prévue de manière fixe par rapport à une région de réception (22), et
b. le contenant de réception (30) pour la réception dans la région de réception (22) comporte une deuxième connexion de ventilation (34B), et
c. la première et la deuxième connexion de ventilation (23, 34B) sont disposées au niveau de la région de réception (22) d'une part et au niveau du contenant de réception (30) d'autre part, de telle sorte qu'en cas de disposition du contenant de réception (30) dans une position de consigne de la région de réception (22), la première et la deuxième connexion de ventilation (23, 34B) sont reliées l'une à l'autre de manière communicante.

6. Poids lourd (10), remorque ou semi-remorque (14) selon l'une des revendications précédentes présentant la caractéristique suivante :
a. il est prévu une unité d'évaluation centrale (68),
- qui est directement reliée galvaniquement à au moins deux capteurs (25A-25D, 37A-B) servant la détection respectivement d'une grandeur d'état d'au moins deux unités de batterie dans au moins deux unités de réception et/ou
- qui est directement reliée galvaniquement à au moins deux dispositifs de connexion (38) servant à la connexion à au moins deux unités de batterie (70) dans au moins deux unités de réception (20) et/ou
- qui est directement reliée galvaniquement à au moins deux dispositifs de connexion (39) servant à la connexion aux éléments polaires (79) d'au moins deux unités de batterie (70) dans au moins deux unités de réception (20).

7. Poids lourd (10), remorque ou semi-remorque (14) selon l'une des revendications précédentes présentant les caractéristiques suivantes :
a. à chacune des unités de réception (20) est associée une unité d'évaluation décentralisée (36) qui est intégrée de préférence dans le contenant de réception (30), et
- qui est reliée à l'au moins un capteur (37A, 37B) servant à la détection d'une grandeur d'état des unités de batterie (70) dans cette unité de réception (20) et/ou
- qui est reliée au dispositif de connexion (38) servant à la connexion aux unités de batterie (70) dans cette unité de réception (20) et/ou
- qui est reliée au dispositif de connexion (39) servant à la connexion aux éléments polaires (79) de l'unité de batterie (70) dans ces unités de réception (20), et
b. il est prévu une unité d'évaluation centrale (68) qui est reliée à au moins deux unité d'évaluation décentralisées (36) par le biais de lignes (62) et qui est réalisée pour le traitement de données ou de tensions de ces au moins deux unité d'évaluation décentralisées (36).

8. Poids lourd (10), remorque ou semi-remorque (14) selon l'une des revendications 6 ou 7 présentant la caractéristique suivante :
a. l'unité d'évaluation centrale (68) est réalisée
- pour stocker des données entrantes provenant de capteurs (25A-25E, 37A, 37B, 74) des unités de réception (20) et/ou d'au moins une caméra (63) dans la région de réception (22) et/ou des tensions mesurées des unités de batterie (70) et/ou
- pour les envoyer par le biais d'une interface, en particulier d'une interface radio, à un récepteur (69) dans une cabine de conducteur du poids lourd ou d'un tracteur, et/ou
- pour les évaluer et pour les traiter de telle sorte qu'en réaction à celles-ci des actionneurs du système de ventilation ou d'autres actionneurs dans la région de l'unité de réception (20) soient commandés et/ou
- pour les évaluer et pour les traiter de telle sorte qu'en réaction à celles-ci des dispositifs avertisseurs pour le conducteur soient activés.

9. Poids lourd (10), remorque ou semi-remorque (14) selon l'une des revendications précédentes présentant au moins l'une des caractéristiques suivantes :
a. à l'intérieur du contenant de réception (30), le dispositif de connexion servant à la connexion à l'au moins une unité de batterie présente un connecteur femelle et/ou un câble (38), et/ou
b. à l'intérieur du contenant de réception (30), le dispositif de connexion servant à la connexion aux éléments polaires (79) de l'unité de batterie (70) présente un connecteur femelle servant à la connexion d'un câble de liaison (39), et/ou
c. dans la région de réception (22) il est prévu un dispositif de connexion (24) servant à la connexion au contenant de réception (30), le dispositif de connexion présentant un câble servant à la connexion au contenant de réception et/ou présentant des surfaces de contact (24, 33) disposées de manière correspondante du côté du contenant de réception (30) et du côté de la région de réception (22), de sorte que par disposition du contenant de réception (30) dans une position de consigne de la région de réception (22), un couplage galvanique des surfaces de contact (24, 33) puisse être obtenu.

10. Poids lourd (10), remorque ou semi-remorque (14) selon l'une des revendications précédentes présentant au moins l'une des caractéristiques suivantes :
a. pour la surveillance commune d'au moins deux unités de réception, il est prévu une caméra (63), en particulier une caméra thermique (63), dans l'espace de chargement (16).

11. Poids lourd (10), remorque ou semi-remorque (14) selon l'une des revendications précédentes présentant au moins l'une des caractéristiques suivantes :
a. les contenants de réception (30) comportent des parois constituées d'un matériau à base de cellulose, de métal ou d'une matière synthétique conductrice, et/ou
b. les contenants de réception (30) comportent des parois constituées d'un matériau ignifuge, et/ou
c. les contenants de réception (30) comportent, sur le côté extérieur, des éléments de refroidissement passifs sous la forme d'ailettes de refroidissement et/ou au moins un élément de refroidissement actif, en particulier un ventilateur, et/ou
d. les contenants de réception (30) peuvent être fermés de manière étanche aux liquides à l'exception de connexions de ventilation (34A, 34B) éventuellement présentes, et/ou
e. des pièces d'adaptation (76) amovibles sont prévues dans le contenant de réception (30), afin de supporter l'unité de batterie (70) dans l'espace intérieur (35) du contenant de réception (30).

12. Poids lourd (10), remorque ou semi-remorque (14) selon l'une des revendications précédentes présentant au moins l'une des caractéristiques suivantes :
a. dans l'espace de chargement (16), les unités de réception (20) sont disposées sous la forme d'au moins une rangée d'unités de réception (20) disposées les unes derrière les autres dans la direction longitudinale du véhicule, en particulier de préférence deux ou trois rangées d'unités de réception (20) étant prévues les unes au-dessus des autres dans la direction verticale du véhicule, et/ou
b. le contenant de réception (30) est réalisé pour la réception d'une unité de batterie (70) d'au moins 150 cm x 100 cm x 20 cm, en particulier pour la réception d'une unité de batterie (70) d'au moins 200 cm x 130 cm x 30 cm, et/ou
c. les régions de réception comportent des ouvertures d'insertion latérales par rapport à l'espace de chargement (16), lesquelles sont réalisées pour une insertion des contenants de réception (30) dans la direction transversale du véhicule, et/ou
d. l'espace de chargement est accessible latéralement à travers au moins une porte coulissante (18).

13. Poids lourd (10), remorque ou semi-remorque (14) selon l'une des revendications précédentes présentant la caractéristique suivante :
a. l'espace de chargement (16) comporte un système de blocage, lequel peut être activé afin de fixer ainsi un contenant de réception dans sa région de réception,
de préférence présentant au moins l'une des caractéristiques supplémentaires suivantes :
b. le système de blocage présente un organe de pression (28A, 28B) mobile de manière guidée dans la région de réception (22), organe au moyen duquel le contenant de réception (30) peut être pressé contre au moins une surface antagoniste, et/ou
c. le système de blocage est réalisé sous forme de système de blocage et de positionnement, lequel peut être activé afin de déplacer ainsi le contenant de réception (30) dans une position de consigne et de l'y fixer, et/ou
d. le système de blocage est prévu en tant que système de blocage commun pour au moins deux contenants de réception (30) dans au moins deux régions de réception (22), à cet effet en particulier des organes de pression (28A, 28B) au niveau des au moins deux régions de réception (22) étant actionnés par le biais d'actionneurs couplés de manière pneumatique ou étant reliés par le biais d'un couplage mécanique (28C), de sorte qu'ils soient déplaçables conjointement au moyen d'un actionneur commun (80).
